Europäisches Patentamt

European Patent Office

Office européen des brevets

(11) Publication number: **0 663 528 A1**

## EUROPEAN PATENT APPLICATION
### published in accordance with Art. 158(3) EPC

(21) Application number: 94918890.8

(22) Date of filing: 28.06.94

(86) International application number:
PCT/ES94/00068

(87) International publication number:
WO 95/01507 (12.01.95 95/03)

(51) Int. Cl.⁶: **F03G 7/10**, F03G 7/04

(30) Priority: 30.06.93 ES 9300146
24.06.94 ES 9400139

(43) Date of publication of application:
**19.07.95 Bulletin 95/29**

(84) Designated Contracting States:
**AT BE CH DE DK FR GB GR IE IT LI LU MC NL PT SE**

(71) Applicant: **Soria Jemenet, Joaquín**
**Vistillas de los Angeles, 11**
**E-18009 Granada (ES)**

(72) Inventor: **Soria Jemenet, Joaquín**
**Vistillas de los Angeles, 11**
**E-18009 Granada (ES)**

(74) Representative: **Garcia Cabrerizo, Francisco**
**OFICINA GARCIA CABRERIZO S.L.**
**Vitruvio 23**
**E-28006 Madrid (ES)**

(54) THERMODYNAMIC PLANT WITH A YIELD EQUAL TO 1.

(57) The invention comprises thermodynamic cycles in order to convert integrally into useful energy the heat of an external source, through coupling of an absorption refrigerating machine to a thermal machine, having independent circuits, housed in a tank (4). The refrigerator takes heat from an external source (0), through its evaporator (13), and evaporates a volatile, which is absorbed by the absorber (23), whose heat is transferred to the evaporator (64) of the thermal machine, evaporating the motor volatile which actuates the turbine (9), and condensing in its condenser (63) in the chamber (37), and generating steam which adds to the steam generated by the evaporator (13), the motor liquid going back to the evaporator (64), for new cycles. A regenerator (31) takes the dissolutions from the refrigerating cycle and regenerates them, sending the volatile one to the chamber (37) and the absorbing one to the absorber (23). It comprises three zones or stages: power, thermorefrigeration and distillation. It is provided with automatic and manual control. Application: power, thermorefrigeration, distillation plants, land and sea propulsion, etc.

FIGURE — I

This present invention refers to a new prototype of thermodynamic power station of unit efficiency, in other words, of one single exterior heat source, preferably natural and renewable, such as the sea, the atmosphere, etc.

It is applicable in the industry of power, distilling, thermo-refrigerating plants, land and sea propulsion, etc.

Indication of the Prior State of Art

The Second Principle of Thermodynamics, according to Clausius, Kelvin, Planck and others, denies the possibility of "Perpetual Motile of Second Species", in other words, a system which is capable of getting heat from one single source and transforming it integrally in useful energy, that is to say, in unit efficiency.

Based on the said Principle, the present thermodynamic power stations, comprised in the Prior State of Art, always carries out a thermodynamical cycle between two sources, heat and cold, with minor efficiency than the unit, due to which no present thermodynamic system is a true "Perpetual Motile of Second Species", good proof of which is, that if it did exist, even though only as a Project, it would be immediately exploited, given its incalculable value.

Present power stations mainly consume fosil fuels, such as coal, petrol and natural gas, the world reserves of which are limited and are on the point of depletion, due to which, new generating systems of energy are under experiment, predominating those using solar energy, direct or indirect, as inexhaustible source which is additionally free from contamination.

The following are to be found among the facilities constructed in order to take advantage of renewable natural heat sources with low enthalpy:

Those using marine heat gradient.

Those using solar plates.

The geothermicals and other diverse ones.

All the above have very low efficiency and require two exterior heat sources: hot and cold, due to which they are completely different from the Patent application, being able to exclude it from the elaboration of the Prior State of the Art.

The invention which is the object of this Patent, completely solves the world energy problem, since this power station has unit efficiency in ideal facilities, in other words, it only requires one single exterior source, such as the sea, rivers, lakes, atmosphere, etc., which are inexhaustible, achieving a "Perpetual Motile of Second Species", with ideal characteristics:

It is a unit efficiency.

The exterior source is inexhaustible

The excess heat of certain industries and thermoelectic power stations may also be used.

The elaboration of the Prior State of the Art in relation to the Patent application, is notably simplified, since only power stations with the previously indicated technical characteristics must be considered, that is to say:

- "Thermodynamical power stations of unit efficiency, in other words, of one single exterior source or "Perpetual Motile of Second Species".

The first practical achievements of these continuous motives were of recreational or experimental kind, in other words, they were used for providing movement to certain objects, the known patents of which are as follows:

- US Patent No. 2.384.168, June 1944, entitled "AN APPARATUS OF ACTIVATED DIVERSION", consisting in a continuously drinking bird, which can be seen in commercial establishments, based on the evaporation of a volatile liquid, by means of atmospheric heat.
- US Patent No. 2.597.890, 20th December, 1949, entitled "ROTATIONAL POWERED UNIT, OPERABLE WITH ATMOSPHERIC ENERGY", used by the UU.SS Navy, for moving a low powered mechanical device.

Some patents of thermodynamic power stations propose the use of a mixture of fluids with different steam stress and eutectic blends, acquiring heat from one single exterior source, according to its inventors, and though the systems differ greatly from the invention which is the object of this patent, both as regards design and procedures, herewith are described some of the same as reference, to facilitate the elaboration of the Prior State of the Art, which is as follows:

- Spanish Patent NSOL-P0497610 and NPUB-8202421, entitled "A SYSTEM FOR THE RECOVERY OF AVAILABLE ENVIRONMENTAL HEAT AND ITS CONVERSION INTO A USEFUL FORM OF ENERGY", consisting in a system for the use of water latent heat of fusion, in the regeneration of energy and the purification of water.

3

- "European Patent NSOE-E86308942 and NPUE-0267992, entitled "CONDENSOR ATMOSPHERIC ENGINE AND METHOD", in which a thermodynamic method and an engine is provided for the extraction of heat energy from the natural environment to environmental temperature and convert it into mechanical work, by means of air liquefaction, which interchanges heat with the exterior, by means of suitable exchangers, and transform them in-work, into expandors.

Description of the invention

This invention refers to a thermodynamical power station of unit efficiency, which performs thermodynamic cycles, which in ideal facilities, integrally convert the heat supplied by one single exterior source, preferably natural and renewable, such as the sea, the atmosphere, etc. or artificial, into useful energy, and which is applicable in energetical, distilling thermorefrigeration stations, land and sea propulsion etc.

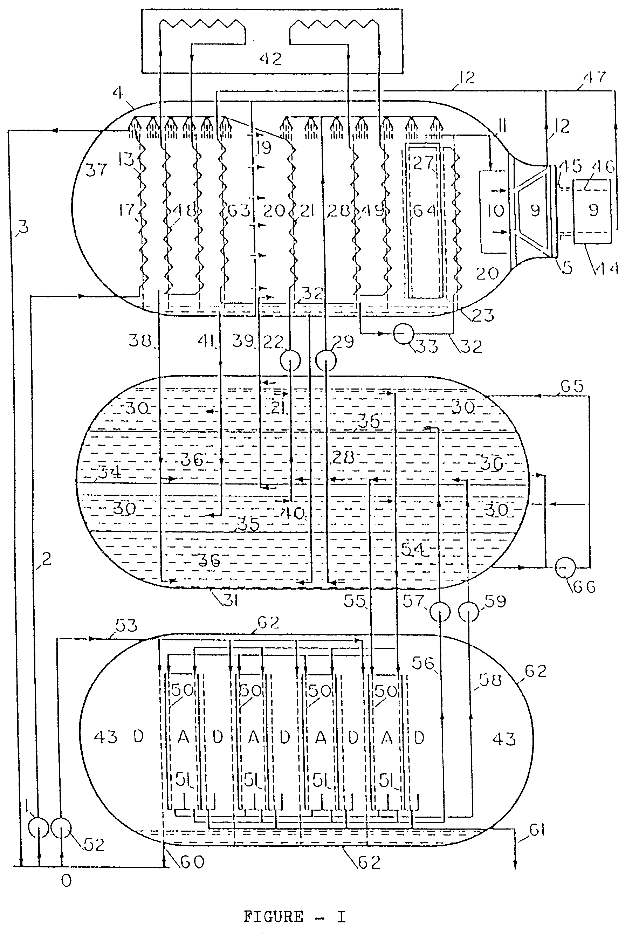

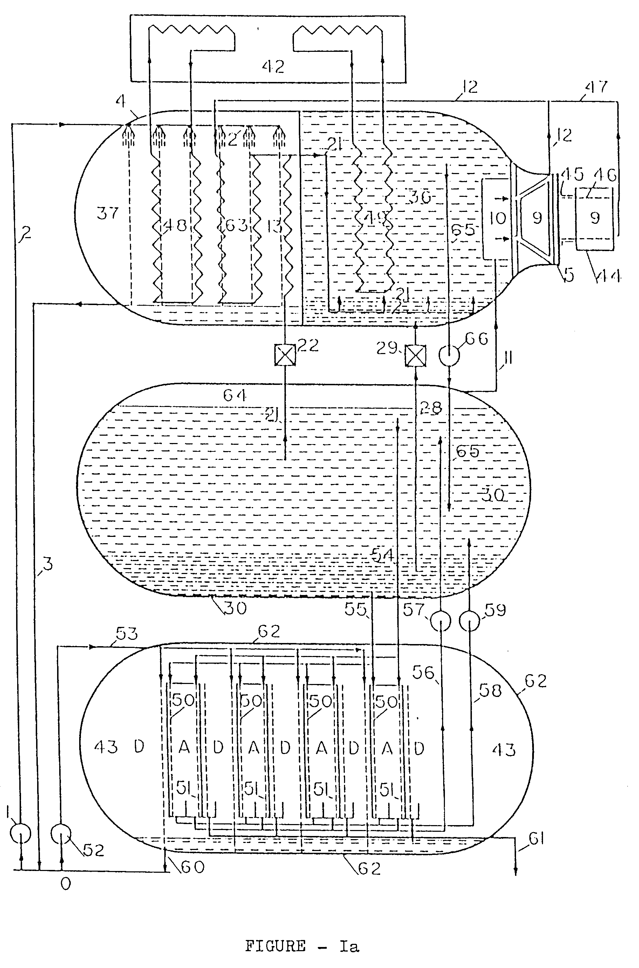

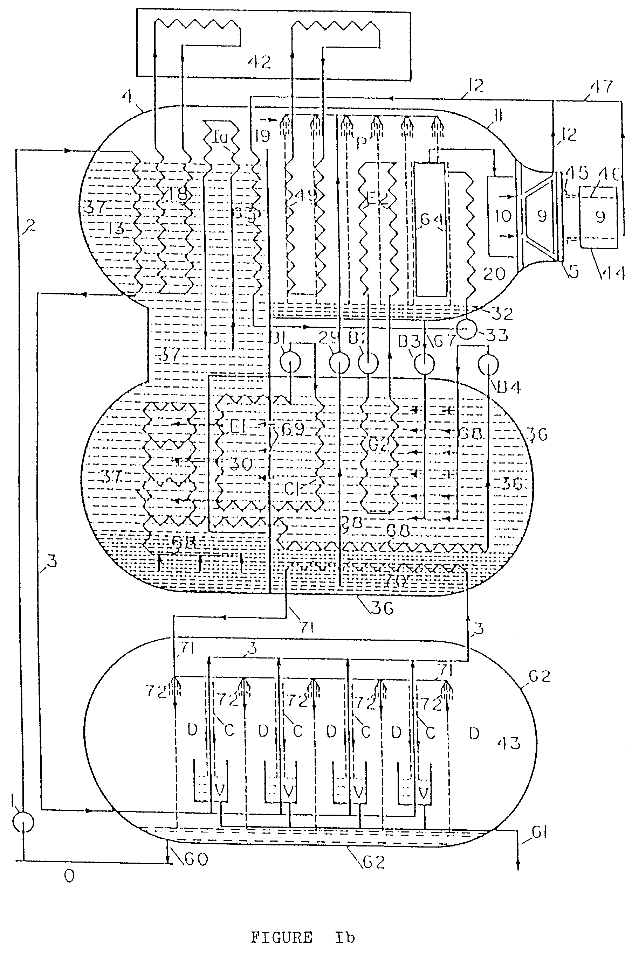

The power plant, figure 1, consists of three zones or plants:

Energy or basic plant.

Conditioning or thermorefrigeration plant.

Distilling plant.

Energy plant

It consists in coupling an absorption refrigeration machine with a thermal machine, in such a way that the evaporation chamber and the absorption chamber of the former contains respectively, the condensor and the evaporator of the second, in independent and sealed circuits. The refrigeration machine achieves exterior heat in its evaporator, and delivers it to its absorber at higher temperature, and simultaneously, the thermal machine achieves heat from the absorber, performs its function and returns the remaining heat to the refrigeration evaporator, thus resulting in a complete recovery and consequently, a unit global efficiency.

The liquid from the refrigeration cycle is a liquid solution of different boiling temperature and at different concentrations, depending on where they are to be found in their evaporator or absorber, and may be formed by liquids, or else by liquids and solids disolved in said liquids. The liquid of the thermal cycle is a pure volatile, or a solution of one or various volatiles and one or various absorbents, which improve their thermodynamic works, and at different concentrations, depending on where they are to be found in the evaporator or absorbent.

In order to simplify the description, we shall refer as "volatile solution", or simply "volatile", to the rich solution in the most volatile liquid, in other words, of lower boiling point temperature, and "absorbent" solution, or simply "absorbent", to the rich solution in the liquid or absorbent body or least volatile, of highest boiling point temperature.

The cycle liquid of the thermal machine may be any with low boiling point, or known refrigerant, since it travels in sealed and independent circuit, with a preference to the non-chlorides, such as the modern SUVA-HFC-134a and other SUVA, be they pure or forming a solution with some suitable absorbent, which improves its thermodynamic works.

For the refrigerator machine, the solutions formed by a body A and another B, would be more interesting, in which the steam stress varies notably, on the variation of the ratio of A/B concentrations. Bodies A and B may be pure or else blended, or solutions with other bodies, in any physical condition, among which may be quoted, as non-limitative example, water and ammonium, the mixable refrigerants and oils, and in general, solutions formed by one or various solvents and one or various solutes, etc.

This plant consists of the following elements:

- A collector of exterior heat made up of an electropump or extractor (1), which takes fluid from the exterior source (0), and by means of the conduit (2) it drives it, and makes it circulate through the interior of the evaporator (13) of the refrigerator circuit, which supplies heat, returning colder, through the return conduit (3), to the exterior source or to the environment.

- A cylindrical tank (4), in the shape of a short neck bottle and cambered bases, closed by a deflector plug (5). Its interior is divided, by means of the perforated plate (19), into two chambers, for example: the evaporator chamber (37) and the absorber (20). The evaporator contains the evaporator (13), the condensor (63) and the heat changer (48), plus the input and output conduits of the volatile fluid in the refrigerator circuit. The absorber contains the absorbent (23), which in turn is the evaporator (64), the heat changer (49), the high pressure chamber (10), with its feeding tubes (11), and its bottle neck, to the turbine (9), with its exhaust or return conduits (12), of the steam to the condensor (63), of the thermal machine.

- A refrigerator evaporator (13), which consists of a series of vertical and horizontal plates and tubes (17), of suitable material, lukewarm fluid circulating on its interior surface, said fluid proceeding from the exterior source (0), driven by the electropump or extractor group (1), supplying heat to the volatile

4

solution, which descends over its exterior surface, generating steam in the chamber (37), passing this steam, by the perforated plate (19), to the absorber (23) which absorbes it, generating heat, at higher temperature, and transferring it to the interior (64).

- An absorber (23), of the refrigerator circuit, which in turn is evaporator (64) of the thermal machine, and which consists of a series of horizontal and vertial tubes and plates (27), of suitable material, over which exterior surface, descends the absorbent solution, proceeding from the regenerator (31), which absorbes the steam proceeding from the chamber (37), generating heat at higher temperature, and supplies the volatile liquid, which descends over its interior surface (64), proceeding from the condensor (63), evaporating it at a higher temperature and pressure.

- A thermal machine, feeded by the steam proceeding from the evaporator (64), which passes through suitable conduits (11) and high pressure chamber (10), to activate the turbine or electric turbogenerator (9), offering a useful work or energy, and finally, passing through suitable conduits, (12) and (47), until it reaches its condensor (63), on the chamber (37), where it condenses, supplying heat to the exterior surface, bathed by a volatile solution, proceeding from the regenerator (31), generating steam, together with that generated in the refrigerator evaporator (13), integrally recovering the reject heat from the trubine, within the chamber (37).

The turbine shall have a specific design for these power plants, which consists in that the axis, drum and vanes shall be cast in one single part of suitable material, preferably, resistant plastic, whilst the directive ring, when it exists, shall be cast in two identical and diametrically opposed parts in order to facilitate its assembly, which shall be preformed preferably at the bottle neck of the tank (4), in such a manner that the steam enters through the high pressure chamber (10) and exits towards the condensor (63), through the conduits (12) and (47), closed to the exterior by means of the deflector plug (5) and housing (44).

- A ionicomolecular regenerator, which consists of a cylindrical and closed tank (31), with cambered bases, divided in various leakfree chambers, by means of horizontal plates (34), each of these chambers being subdivided, into two layers of different concentrations: one (30), volatile rich, and the other (36), absorbent rich, into which the volatile and absorbent solutions of the refrigerator cycle enter, proceeding from the bottom of the chamber (37), through the conduit (41), and from the bottom of the chamber (20), through the conduit (40), respectively. Additionally, a steam mass or m kg reach the absorbent layers (36), through conduit (38), from the chamber (37) from the refrigerator circuit, which is absorbed, generating heat, passing liquid to the volatile layers (30), through the permeable plies (35), which cool, on supplying it evaporated to the absorption chamber (20), through the conduit (39), originating at the regenerator (31), a current of volatile liquid, from the absorbent layers (36) to the volatiles (30), emphazising the difference of concentrations between layers, which remain in their initial condition, ready for new cycles.

The mission of the m kg steam mass is to supply its total absorption heat to the layers (36), which are used for passing liquid volatile to the layers (30), obtaining, as a final net result, the passage of volatile liquid from the refrigerator cycle from the (36) to the (30).

Optionally, this effect of the m kg steam mass may be replaced in whole or part, by a displacement effect, adding a body C, soluble in volatil A and absorbent B solutions, of the refrigerator circuit, when it is found in the regenerator (31), in such a way that it joins chemically or physically to a part B' of body B. In this way, only part B-B' of body B remains free, which equals a concentration effect of A in B, since ratio A/(B-B') is greater than the original, for example;

$$A/(B-B') > A/B.$$

Therefore, layers (30) are enriched in volatiles, on decrease of the free part of B, obtaining the same effect as with the m kg steam mass.

In order to make ideas clear, we may suppose that solutions A and B are of ammonium and water at different concentrations and that body C is the sodium sulfate.

This sulfate shall be hydrated in layers (30) since said layers have temperatures below $30°C$, and shall be dehydrated in (36), since said layers have temperatures over $33°C$, obtaining a concentration effect of ammonium in layers (30) and a decrease in (36).

The solution rich in anhydrid sulfate passes through tube (65) and pump (66) to layers (30) where it hydrates freeing ammonium and taking water, regenerating the solutions, by which the same effect as with the m kg steam mass is obtained.

The complete cycle of the energetic plant is as follows:

An electropump or extractor (1), takes a fluid from the exterior source (0), at temperature To, and by means of a conduit (2) drives it towards the evaporation chamber (37), of the resevoir (4), and makes it circulate through the interior of the evaporator (13), of the refrigerator circuit, which supplies heat, becoming colder, through conduit (3), to the exterior source (0) or to the environment. This heat supplied by the exterior source is transferred to the volatile, which descends over the exterior surface of the evaporator (13), and which, jointly with the reject heat of turbine (9), which delivers it to the interior of its condensor (63), generates steam, in said chamber (37), at temperature T1 < To, said steam passing through the perforated plate (19) to the absorption chamber (20), absorbing itself, with heat detachment, over the absorbent solution, which baths the exterior surface of the absorber (23), the interior of which is in turn, the evaporator (64) of the heat machine, to temperature T2 > T1, thus creating a heat source at the cost of the exterior source (0), which is colder.

Part of this heat is transferred to the volatile liquid of the interior of the evaporator (64) of the thermal, which takes it at temperature T3 < T2, generating steam, which activates the turbine or turbogenerator (9), performing an motor cycle, from temperature T3 to T4 > T1, of the evaporator (13), of the refrigerator machine, passing the exhaust to its condensor (63), positioned in the chamber (37), which integrally returns the untransformed heat into work, generating steam, jointly with the one generated in the evaporator (13), by the heat delivered by the exterior source (0), which is supplied to the absorber (23) of the refrigerator, which absorbes them at temperature T2 > T1. part of which heat is transferred to the interior of the evaporator (64) of the thermal, at temperature T3, closing the cycle, by which there is a total recovery of the untransformed heat into work, and consequently the heat supplied by the exterior source (0) to the refrigerator machine, is equal to the work produced by the thermal machine, therefore, the system has, in general, a "unit efficiency", because the exhaust steam (12), of the thermal, is supplied to its condensor (63), in chamber (37) the heat of which, transfers it to its exterior surface, generating an equivalent steam to this heat, jointly with that of the evaporator (13), Both steams are absorbed in the chamber (20), over the absorbent, at a temperature of T2 over T3, of the evaporator (64) of the thermal, allowing this machine to carry out a motor cycle, between temperature T3 of its evaporator (64) and T4 of the exhaust, which has not been carried out till now by any thermodynamical cycle, therefore, the system is a "Perpetual Motile of Second Species" and is not included in the "Prior State of the Art", since up to now, it was considered "impossible".

The "Perpetual Motile" is achieved by means of the regeneration of volatile and absorbent solutions of the circuit in the absorbance refrigerator machine, in the ionicomolecular regenerator, of new invention, which is an essential part of this patent, the method of which is described as follows, referred to a cycle of unit mass for simplification.

The regeneration of the solutions is carried out using a m kg steam mass per each 1 Kg. of steam cycle, such that the total heat of absorption m(Qv + Qd), on its absorption over layers (36) is equal to the one required Qd(m + 1), for the separation or passing of (m + 1) kg of liquid volatile, from these layers (36) up to the (30), that is to say, that the following is met:

$$m(Qv + Qd) = Qd(m + 1) \text{ from which is obtained}$$
$$m\,Qv = Qd$$

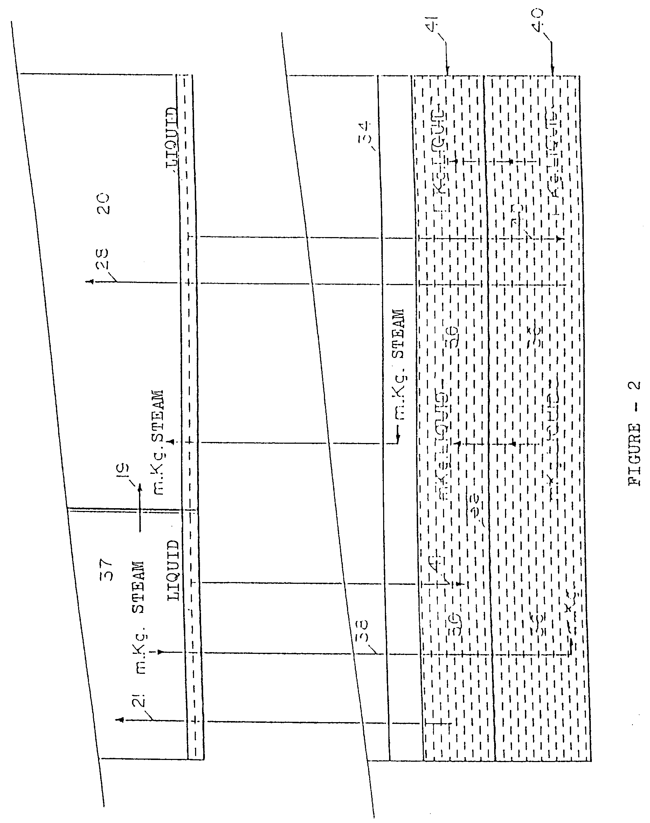

Figure 2 is a commencement diagram with a volatile layer (30) and an absorbent one (36), separated by the permeable ply (35), with reference to the considered unit mass cycle.

A m kg steam mass, passes through the tube (38), from chamber (37) to the layer (36), with equal thermodynamical conditions which exits by the layer (30), to chamber (20), the passage of which, generates a liquid volatile current in direction (36)--(30), increasing the concentration in (30) and decreasing it in (36).

In effect, the m kg steam mass passes through the regenerator taking and supplying equal quantity of heat, as has been indicated, therefore, according to the First Principle, the variation of internal energy is zero, that is to say:

$$\Sigma Q = 0$$

Though if layer (36) has supplied, at constant temperature, 1 kg of pure liquid volatile, it must take the separation or extraction heat of the said 1 kg, that is to say:

$$Qd$$

The layer (30), of M kg mass has taken this 1 kg of pure volatile and has cooled, on evaporation of the m kg steam mass, therefore, the energy variation is:

| Per absorption of 1 kg | Q'd |
| Per cooling of 1 kg | Q1 |
| Per cooling of M kg | Q2 |

Though according to the First Principle, the variation of the internal energy is zero, therefore:

$$Qd = (Q'd + Q1 + Q2) = 0$$
$$Qd = Q'd + Q1 + Q2$$

If we suppose, for simplification sake, that the layer (30) has a very high concentration volatile solution, for example, it is almost pure in the volatile component, the following may be taken to be:

$$Q'd = 0 \text{ Therefore, finally:}$$
$$Qd = Q1 + Q2$$

That is to say, that the saparation or passage heat Qd, required for passing 1 kg of liquid volatile, from layer (36) to layer (30), is carried out at the cost of the decrease of temperature of the layer (30), which supplies the equivalent heat Q1 + Q2. This heat returns it to take mass of M kg, of the rejection turbine heat Qd - Q1, plus the Q1 of the absorber (23), which in total is Qd, remaining both layers (30) and (36) in the same initial conditions, ready for a new cycle, with which the internal energy variation of the system is zero, as had to happen, according to the First Principle of Thermodynamics, the demostration of which is described as follows:

Figure 3 is a thermodynamic diagram, which refers to the cycle carried out by the mass unit. The phases and number of cycles which it includes are as follows:

The exterior source (0), delivers the evaporator (13) of the chamber (37), the heat Qv, to generate 1 kg of steam, to temperature T1, i.e., it delivers the heat Qv, supplied by the exterior fluid.

This 1 kg of steam is absorbed in chamber (20), over the absorber (23), at temperature T2 > T1, generating heat Qv, plus the absorption heat Qd, i.e., with a total of:

$$Qv + Qd$$

The heat transferred to the evaporator (64) of the turbine (9) shall be Qv + Qd, minus the heat required for heating the 1 kg of liquid of the absorbed cycle, from temperature T1 of the evaporator (13) to T2 of absorption in (23), which we have named for simplification, Q1 which remains in the absorbent mass, therefore, the real heat transferred to the evaporator (64) of the turbine (9) is:

$$Qv + Qd - Q1$$

This heat generates steam for the motor cycle, in the evaporator (64), passing to the turbine (9), where it produces work w, sending the rest, not transformed into work to the condensor (63) in the chamber (37), by which the heat returned to this chamber (37), to be used in the following cycle shall therefore be:

$$(Qv - w) + (Qd - Q1)$$

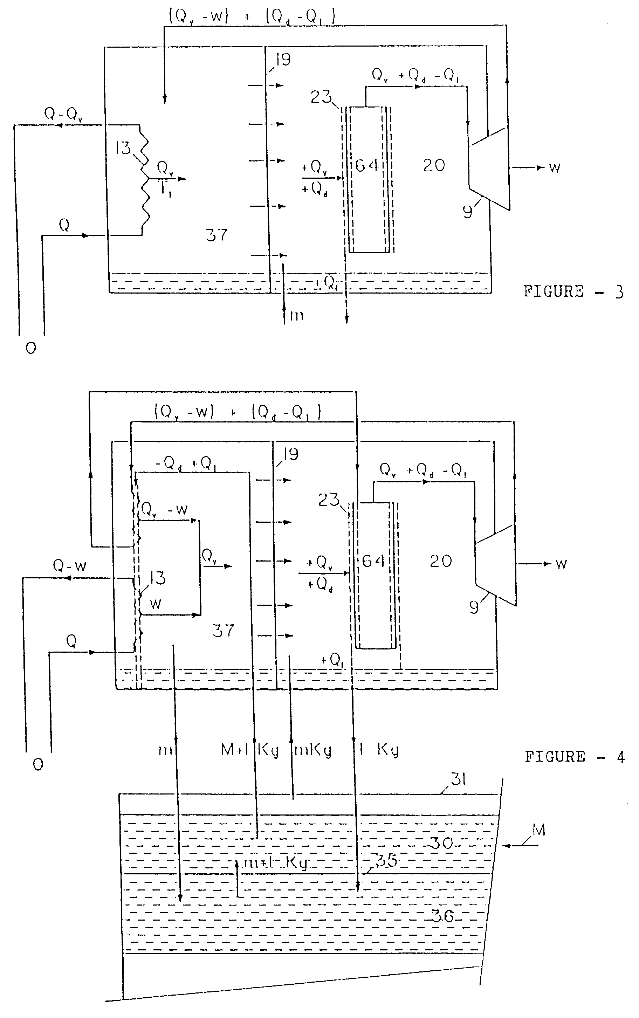

In figure 4, to the evaporator (13), of chamber (37), comes, for the following cycle, mass (M + 1) kg, of volatile solution, proceeding from layers (30), of the regenerator (31), which supplied the heat mQv = Qd, for evaporation of the m kg of volatile mass, and additionally, heat Q1, supplied by the 1 kg of liquid volatile, transferred from layers (36), therefore, the heat balance of mass (M + 1) kg, referred to the initial conditions, in its evaporator (13) shall be:

$$-Qd + Q1$$

Which added to the ones returned to the chamber (37), results in:

$$\Sigma Q = (Qv - w) + (Qd - Q1) + (-Qd + Q1) = Qv - w$$

Therefore, the rejection heat available in the chamber (37) for the second cycle is evidently, Qv -w.

However, the heat required in the chamber (37), for the second cycle, is also Qv, therefore, the exterior source (0) must deliver now the equivalent heat to w, so that added to the one available, remaining as rejection Qv -w, in chamber (37), gives us Qv, complying with the first Principle, i.e.:

$$\Sigma Q = Qv - w + w = Q v$$

Summing up the calculation, referred to n cycles, we obtain the following table:

| Delivered Heat | Extracted Heat | Rejected heat |
|---|---|---|
| Qv | w | |
| w | w | |
| - | - | |
| w | w | Qv - w |

However, the total heat delivered must be equal to the heat or work extracted plus the rejection heat, in order to comply with the First Principle, i.e.:

$$Qv + (n - 1)w = nw + Qv - w$$

This heat Qv - w remains retained in the chamber (37), at the end of the $n^{th}$ cycle, available for the subsequent cycles.

If on stopping the machine we return Qv - w to source (0), the result is that the heats delivered and extracted in reality, from the systems would be:

| Delivered to the system | nw |
|---|---|
| Extracted from the system | nw |

Adding up algebraically we obtain:

$$\Sigma Q = 0$$

The First Principle is met:
The average efficiency for n cycles, deduced from the previous table, without stopping the machine is:

$$\sigma = nw / (Qv + (n - 1)w$$

Giving values to n is obtained
For n = 1 ..........$\sigma$ = w /Qv (Carnot)
For n = ∞ ..........$\sigma$ = 1 (Perpetual Motile)
Therefore, in this system only the first cycle equals the Carnot or Rankine, though the n - 1 remaining cycles are total recovery cycles, and therefore, of unit efficiency, therefore, the system is a "Perpetual Motile of Second Species", for a great number of cycles.

The turbine (9) may mate with an electrical generator, by means of a closed housing (44), which encloses it, opened only by the adjacent end to the turbine (9), with which the system remains totally closed to the environment, avoiding leakage of volatiles or ingress of air. The refrigeration is carried out by means of the circulation of a part of the cold steam of the turbine (9) exhaust, which through orifices (46) passes through the generator, refrigerating it from one end to the other, finally passing through the tubes (47) and (12), to this condensor (63) in the chamber (37), condensing and supplying rejection heat to its exterior, evaporating volatiles, jointly with the evaporator (13). In the power plants fed by environmental heat, the refrigeration is carried out at temperatures below ambient To, of the exterior source (0), being T4 < T, gaining heat, which is added to the leaks of the electrical generator by the Joule effect, frictions, etc., which are returned to the system by the refrigerant steam of the turbine exit.

In power plants which are fed by sea water, the winter temperature To of which, is over environmental temperature Ta, there will be heat radiation towards the environment, by which the efficiency shall be lower than the unit since this heat is lost, though it is compensated in summer, when it will be To < Ta.

Consequently, the theoretical efficiency may be considered unit, with an appreciable error, for both power plants, which we will denominated IDEAL POWER PLANTS , by which we may accept the common definition for both given in the title of the invention: "THERMODYNAMICAL POWER PLANTS OF UNIT EFFICIENTY"

Conditioning or thermorefrigerating plant

The energetic plant may be incorporated with an air conditioning plant, for conditioning the air at the power plants, buildings or for refrigeration plants, such as is described as follows: with reference to figure 1:

The air at a refrigerator chamber or premises (42), is cooled in the chamber (37), when heat is supplied to a changer-evaporator (48), over the exterior surface of which, descends the volatile solution of the energetic plant refrigeration circuit, coming from layers (30), through the tube (21) and pump (22), which evaporates on taking this heat, cooling the air or fluid which circulates inside, obtaining an industrial cold in the case of chambers, or air conditioning for buildings during the summer.

Likewise, the air in any premises whatsoever (42), is heated in the chamber (20), by means of an absorber (49) , over whose exterior surface descends the absorbent solution of the refrigeration circuit of the energetic plant, which absorbs the steam proceeding from the chamber (37), generating heat, which it supplies to the air or interior fluid of the absorber (49), heating it and obtaining air conditioning during winter.

Both facilities are evidently autonomous and silent, and do not require a supply of driving exterior energy.

The economy and hygiene of these facilities are in themselves evident, since they do not consume electrical, or driving energy, or any fuel whatsoever, consequently not altering the environment.

Due to the fact that their refrigerants are in sealed containers and function in closed circuits, no danger of intoxication exists caused by exhausts due to cracks or misadjustments, additionally being able to use almost inoffensive refrigerants, both for life as for the ozone layer, as are, for example, the modern SUVA-HFC-134a, and other non-chlorided SUVA's.

Distilling Plant

The energetic plant may incorporate a distilling plant, which is described as follows, with reference to the desalination of sea water, for simplifying its description, though it may evidently distill other solutions.

Figure 1, represents schematically, this distilling plant, coupled with the energetic plant, with the width of cells and its interdistances greatly increased in relation to its height for reasons of clarity in the drawings, due to the fact that the real proportions of these proportions may be 100 or more in order to decrease the volumen of the distillating plant.

It consists in the coupling of cells (A), carriers of the absorption refrigeration circuit, with cells (D), of the distillation, in such a way that the evaporator (51), and the absorber (50) of the refrigerators, are, respectively, on their exterior surface, the condensor and evaporator of the distillers, and all of them contained in a closed, cylindrical and cambered based tank (62), inside of which (43) a barometric vacuum reigns, corresponding to the sea water steam at a temperature with which the evaporation is carried out. Optionally, the ends intended for the cells may be inverted in such a way that the refrigerators are distillers and the distillers are the refrigerators, with which the tank (62), shall thus work with interior pressure, which is over that of the environment, and not in depression. To this tank, comes, by means of the conduit (54), the volatile solution, from the layers (30), of the regenerator (31), and by the conduit (55), the absorbent solution, from the layers (36), which enter cells (A) separately, descending by the opposing walls (51) and (50), respectively, being collected at the bottom, also separately, from which they are resent to the regenerator (31), by means of the conduit (56) and pump (57), and conduit (58) and pump (59), for its regeneration and new cycles, with the following operation:

The sea water is captured by an electropump group (52) and driving through the conduit (53), towards a vacuum chamber (43), where the evaporation and condensor cells are to be found, descending in laminate form on the exterior of the absorber (50), which delivers heat, by which the sea water evaporates, passing said steam to the exterior of the condensor (51), condensating and descending in already liquid form over its exterior surface, supplying heat which generates steam to the volatile solution of the refrigeration circuit which circulates inside the evaporator (51), which is absorbed by the absorbent solution, over the interior surface of the absorber (50), closing the cycle in such a way that the vaporization heat of the sea water, is taken in the absorber (50) and delivered into the evaporator (51), and, simultaneously, the absorption heat of the refrigerant stops in (50) and is taken up in (51), resulting in a double effect circuit, in which heat is simultaneously taken and stopped, with a minimum consumption of energy, corresponding to the desalination of sea water.

The regeneration of the volatile (50) and absorbent (51) solutions, is carried out in the regenerator (31) of the power plant, or else in an independent one, as is advisable in each case, according to its simplicity and economy.

The sea brine returns to the sea, through the barometric conduit (60), whilst the distilled water exits via the barometric conduit (61), to a regulating tank, from which it is sent to the distribution conduits.

This power plant allows the free desalination of sea water and the simultaneous production of energy, without the need of great intakes of sea water, since the evaporation by vacuum is practically isothermic when taking heat from the absorber (50), by which the destillation/salination ratio may be of 1/2 or more.

The advantages of this invention as regards the present power plants of the same user included in the Prior State of the Art, may be summarized by the following:

- The assembly requires one single exterior heat source, and the present ones require two sources: heat and cold.
- The efficiency is always the unit in ideal circuits and independent from the temperature, and that of the present ones is less than the unit and function of extreme temperatures.
- Takes free heat from an exterior source, and the present ones consume expensive fuels.
- Functions generally at almost environmental temperatures, allowing the use of plastic materiales, which are cheap and easily machinable, and the present ones demand materiales with high flash point, are expensive and of difficult machining.
- The exterior heat source is generally the sea, rivers, the enviroment, etc., and the cycles are conducted in closed circuits, which are non-contaminants, whilst those of present classical system are contaminants.
- They do not alter the heat equilibrium of the earth, since the heat abasorbed from the exterior source is returned once more by the Joule effect or by any other form of energy, whilst classical facilities do alter it.
- The facilities of these new power plants do not demand expensive materials or special safety measures as demanded by classical facilities.
- The regeneration of the volatil and absorbent solutions, required for the repetition of the cycles are carried out in an ionicomolecular regenerator, "without requiring to supply additional heat from an exterior source to the system", as occurs in the case of all present absorption machines in its generator or separator.
- The destillation production is completely free, due to which it represents the ideal solution for the supply of water to all coastal cities and to irrigated land near the sea, as well as for the obtention of destillation in the chemical industry.
- In thermorefrigerator facilities, the extraction or supply of heat is free, silent and non-contaminant, due to which, it may be used in hospitals and in all buildings and sections which demand a low level of sound.

All circuits of the power plant are equipped with automatic and manual control, due to which, it includes an autocoupled unit for data processing, with the possibility of carrying out orders for pumps, valves, flow regulators, temperature, pressure, solution concentration, etc. groups.


Brief description of the drawings

Figure 1, represents the diagram of a complete power plant, according to a prefered embodiment, comprising:
- A collector of heat from the exterior source (0), with its set of electropump or extractor (1) and driving (2) and return (3) conduits.
- A tank (4) containing the evaporator (13) and condensor (63) in the chamber (37), the absorber (23) and the evaporator (64) in the chamber (20), and the turbine or turbogenerator (9), in the tank neck (4), being additionally equipped with the necessary conduit pitches.
- A regenerator of the fluids in the refrigeration cycle, made up of a tank (31) and various layers (30) and (36), rich in volatiles and absorbents, respectively.
- A conditioning or thermorefrigeration plant with its heat exchangers (48) and (49).
- A distilling plant with its refrigeration cells (A) and distillers (D), inside the closed tank (62).

Figura 2, represents the diagram of the commencement of the regenerator of the absorption refrigeration cycle solutions, with weference to two layers, in order to simplify its exposition.

Figures 3 and 4 are diagrams of the commencement of a thermodynamic cycle, with reference to the mass unit.

Figures 5, 6 and 7 are details in sections of the evaporator (13), abosrber (23) and distilling cells.

Figure 1a, represents the diagram of the complete power plant, according to another preferred embodiment, the variations of which, as regards the one referred in figure 1, are as follows:

The circuit of the thermal and of the refrigeration machine are one single one, as may be observed in figure 1a.

The regenerator (31) is divided into two tanks: the (30), containing layers (30) of (31) and the evaporator (64) of the thermal, and the (36), containing layers (36) of the (31) and the absorber (23).

The evaporator (13) and the reheater (63) in the chamber (37) replace the evaporator (13) and the condensor (63) of figure 1.

Figure 1b is a complete diagram of another preferred embodiment, the variations of which, as regards figure 1 are as follows:

The regenerator (31) is divided into two tanks; the (36) or separator and the (30) or joint of the volatile and absorbent bodies.

The system is equipped additionally with two heat pump circuits (B1) and (B2), for transference of heats.

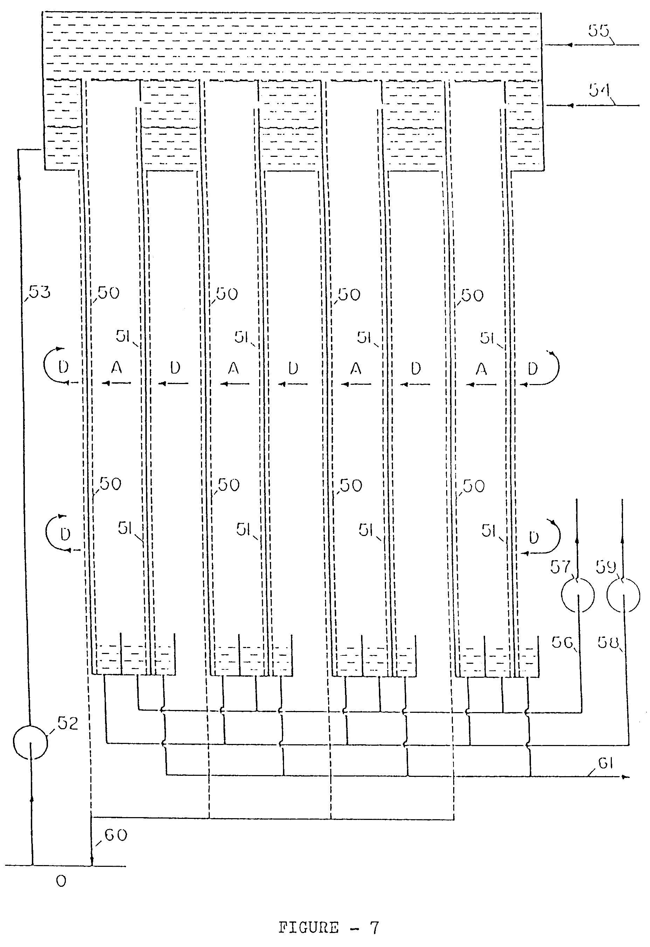

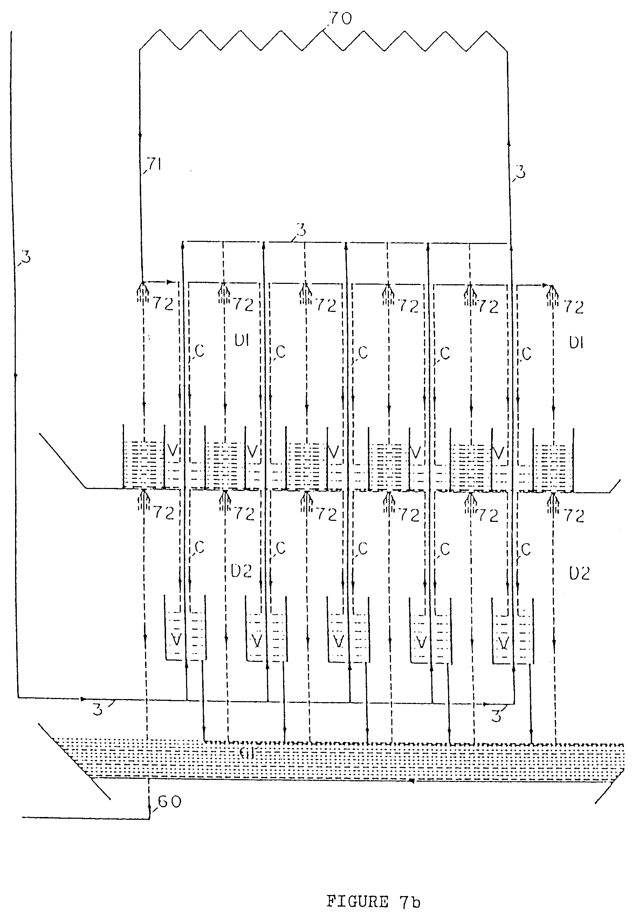

The distilling plant, figure 1b and in detail, figure 7b, containing their evaporating cells (D) and condensor tubes (C), within the tank (62).

Description of a preferred embodiment

Herewith shall be expounded, a complete description of the said invention, with reference to the enclosed drawings, in which is represented, only as nonlimitative example, a preferred form of embodiment, with reference to a compete power plant susceptible to all those modifications of details which do not alter its essential characteristics, which are described as follows.

In said drawings: figure 1, represents in esquematical form the section of the assembly, corresponding to a complete power plant, i.e., energetic, conditioning and distilling plant.

This Power Plant shall be considered located near the sea, in such a way that the latter shall be the exterior source (0) of heat supply to the system.

We shall likewise consider, that the fluids of the cycle of the absorption refrigeration machine are two water and ammonium solutions of different concentrations: one rich in ammonium, which shall be named volatile, and the other rich in water, which shall be named absorbent. The motor cycle fluid shall be the modern non-chlorided refrigerant, named SUVA-HFC-134a, which is of low toxicity and dow not affect the ozone layer.

It must be of course understood, that the said fluids are only non-limitative examples, since all those indicated in the description may be used.

For a better interpretation, we shall divide the description as follows:

Energetic or basic plant

- The exterior heat collector shall be made up of a group of vertical electropumps (1), which consist in a plastic material spiral, capable of carrying the sea water to a minimum height of 0,5 m.c.a. which is sufficient, driven by electric engine. The intake (2) and return (3) conduits, shall be made of plastic material, sea water resistant and resistant to the mechanical actions they are subjected to.

- The cyclindrical tank (4), shall be in the shape of a short botlle neck with cambered base and shall be closed by a deflector plug (5).

It shall be constructed of a material resistant to the actions of the cycle fluids, both mechanical and chemical, such as steel, PVC, polyester/glass, etc.

It shall be equipped inside with the evaporators (13) and (64), the condensor (63) the absorber (23) and the turbine (9), being additionally equipped with the necessary pitches for the condudits and the tubing system, which shall have sealed collars for impeding steam leaks to the outside.

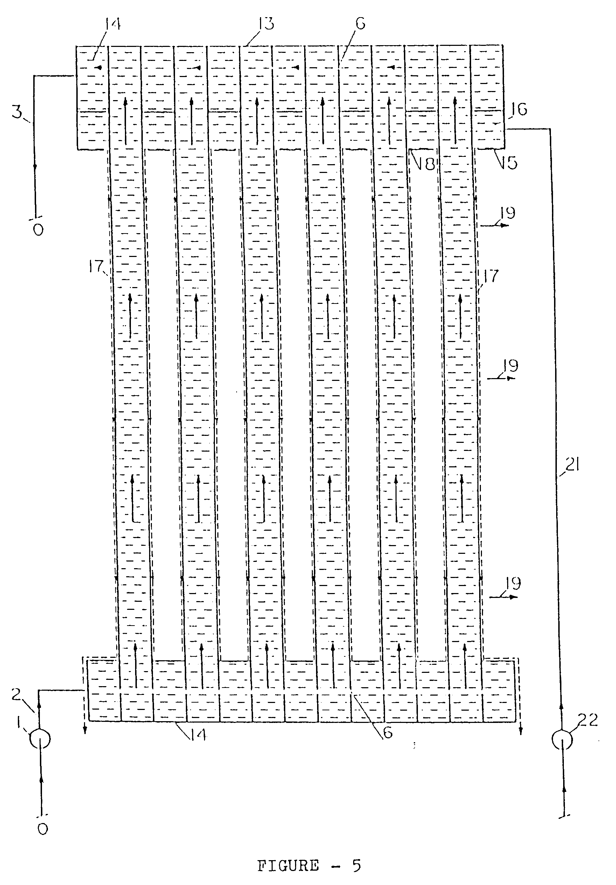

- The evaporator (13), figure 1 and detail of figure 5, assembled in the chamber (37) is made up of two cylindrical coaxial tanks (14), with parallel bases and short height, constructed with suitable material, the upper one being equipped with a double bottom (15) which encloses a chamber (16). These reservois communicate by means of a bundle of tubes (17), of suitable material, perpendicularly seal-welded to the bases, through which interior rises the fluid captured from the exterior source (0), the latter supplying heat to the tubes (17), through which exterior descends the volatile solution from the chamber (16), thanks to a gap (18) existing between the double bottom of this chamber and the tubes (17), evaporating when it takes the heat supplied by the source (0), exiting said steam, by the perforated plate (19), towards the absorption chamber (20), where it is absorbed by the absorbent solution over the absorber (23). The tube ends (17), inside the tanks (14) carry orifices (6) which permit the passage of fluid from the exterior (0), which enters by means fo the conduit (2) and returns by means of the conduit (3), driven by the electropump group (1), whilst the volatile enters by the tubing (21) and the pump (22), coming from the layers (30) of the regenerator (31).

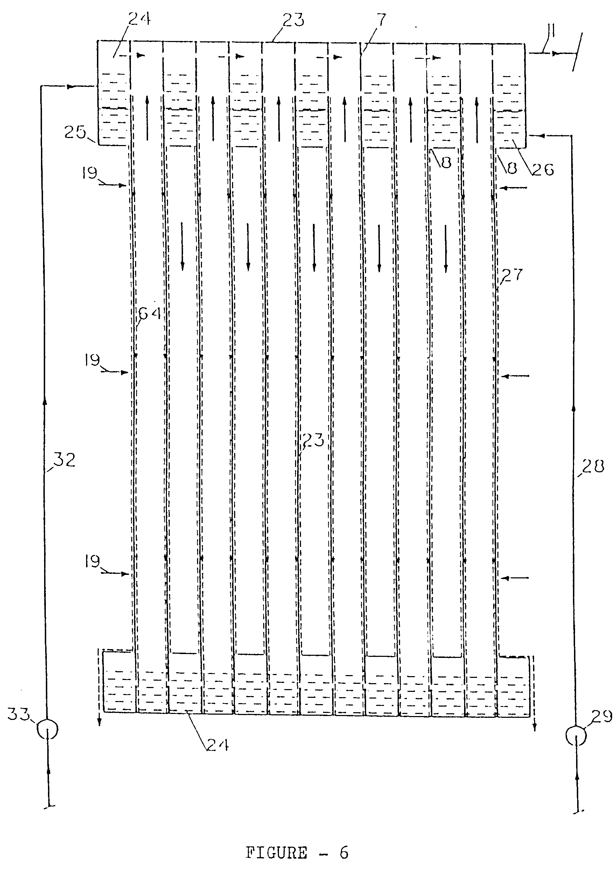

- An absorber (23), figure 1, and detail, figure 6, assembled in the chamber (20), made up of two coaxial cylindrical tanks (24), with parallel bases, of short height, constructed of suitable and resistant material, the upper one being equipped with a double bottom (25), which encloses a chamber (26). These tanks communicate by means of a bundle of tubes (27), of suitable material, seal-welded and perpendicular to the bases, through which exterior descends the absorbent solution, proceeding from chamber (26). Thanks to a gap (8), existing between the bottom of this chamber (26) and the tubes (27), which absorbs the steam proceeding from the chamber (37), generating heat, which it supplies to the tubes (27), through which interior descends the volatile of the motor cycle, from the upper tank (24) to the lower one, thanks to orifices (7), existing at the tube ends (27), evaporating at high pressure, passing through the conduits (11) and chamber (10) to the turbine or turbogenerator (9).

To the exterior surface of this absorber (23), arrives, by means of spaces (19), the steam proceeding from chamber (37); through the tube (28) and pump (29), the absorbent solution, proceeding from the layers (36), of the regenerator (31), which enters by means of the chamber (26), descending by the exterior (23), of the tubes (27), where it absorbs the vapors coming from chamber (37), generating heat, which it supplies to the interior (64), which is the evaporator of the thermal machine. To the interior (64) of the absorber (23) comes the volatile of the motor cycle, proceeding from the condensor (63), through the tube (32), driven by the pump (33), which, when it takes the heat generated by the absorption of the steam over the absorbent solution, which descends via the exterior surface (23), of the tubes (27), evaporates at height temperature and pressure, passing to the upper resevoir (24), and from there, and by conduits (11), to the chamber (10), intended for the supply of steam to the turbine.

- A thermal machine consisting of an electropump group (33) and tubing (32), cycle volatile liquid feeder, which it takes from the condensor (63), constructed in such a way and with a material which is similar to the evaporator (64), and sends it to the evaporator (64), where it evaporates at high pressure. This steam passes through the conduits (11) to the chamber (10) and from it, to the turbine or turbogenerator (9), obtaining a useful energy coming out of the conduits (12), towards the condensor (63), where it condenses and supplies this heat to the volatile which baths its exterior in the chamber (37), evaporating it together with the evaporator (13), for a new cycle, due to which there is a total recovery of the exhaust heat, i.e. of the heat not transformed into work or useful energy.

A turbine-generator sealed mechanical coupling has been foreseen, intended for interior refrigeration of the same and watertightness of the assembly, consisting in a closed housing (44), of resistant material, which encloses the generator (9), only opened by the end adjacent to the turbine, which is equipped with a collar (45), for coupling, thus making the system totally closed to the environment, due to which, fluid leaks from the motor cycle or refrigerator is impossible.

The refrigeration is carried out by means of the circulation of a part of the cold steam of the turbine exhaust, which passes into the inside of the electric generator, going over them, from one end to the other, finally passing to the condensor (63) via the conduits (47) and (12).

- The regenerator (31), figures 1 and 2, for regenerating the volatile and absorbent solutions of the refrigeration cycle, proceeding from the absorption (20) and evaporation (37) chamber, consists in a closed tank (31), of suitable material such as treated steel, PVC, polyester-glass, etc., resistant to the actions of the absorption refrigeration cycle solutions, and which is divided into numerous leakfree chambers, (only two represented in the drawings due to reasons of clarity in the drawings), by means of horizontal plates (34), resistant to the actions of the cycle fluids. Each chamber is divided, by means of a permeable ply (35), of suitable material, into two layers of different concentrations: one (30) rich in volatile, and the other (36), rich in absorbent. The steam, proceeding from the chamber (37) reaches these latter, via conduit (38), where it is absorbed, generating heat, and, simultaneously, via the conduit (39), exits an equal quantity of steam and in the same thermodynamic conditions towards the chamber (20), from layers (30), cooling them, and creating a difference of temperatures and concentrations, which generates an ionicomolecular volatile liquid current, from the layers (36) to the (30), emphasizing the difference of the concentrations between layers, or else the stratification of the solutions by cooling and densities.

Tubing (40) enters the regenerator (31) from the chamber (20), and the tubing (41) from the chamber (37).

Exit the tubing (21) and pump (22), with the volatile solution towards the chamber (37), generating steam of the volatile solution; the tubing (28) and pump (29), with the absorbent solution, towards the absorption chamber (20), which descends via the exterior of the tubes (27) in laminar form, absorbing the volatile steam of the chamber (20). Optionally, the tubing (65) and pump (66) from the layers (36) to the layers (30).

Conditioning or thermorefrigeration plant

The conditioning plant shall be equipped with an exchanger-evaporator (48), over which exterior surface volatile fluid descends from the refrigeration machine circuit, to the chamber (37), thus obtaining the industrial cold, or else, air conditioning during the summer, respectively. Likewise, absorption heat in the conditioning of premises may be used, during winter, by adding an absorber (49), which takes absorption heat from the chamber (20). The interior fluid from these evaporators or absorbers may be any of the ones used in the thermorefrigeration industry or the actual air conditioning.

Both facilities are evidently autonomous, not requiring an exterior driving energy supply to the system, being likewise, silent, since it lacks compressors, and absolutely hygienic, due to the fact that the cycle fluids shall be inside sealed containers.

Distilling plant

This plant, according the diagram of figure 1 and detail of figure 7, consists in the coupling of cells (A), carriers of the absorption refrigeration circuit with distilling cells (D), constructed from a heat conducting material resistant to the cycle fluids and to sea water, and arranged in such a way that the evaporator (51) and the absorber (50) of the refrigerators are, respectively, on its exterior surface, the condensor and the evaporator of the distillers, and all of them shall be contained in a closed, cylindrical tank, with its two cambered bases (62), inside the interior of which (43), a barometric vacuum reigns, corresponding to the sea water steam stress to the temperature at which the evaporation is carried out. Optionally, the object of the cells may be inverted, in such a way that the refrigerators be the distillers and the distillers be the refrigerators, with which the tank (62), shall thus work with an interior pressure over that of the environment, and not in depression.

To this tank comes, via the conduit (54), the volatile solution, from the layers (30) of the regenerator (31), and via the conduit (55), the absorbent solution, from the layers (36), which enter the cells (A) separately, descending via the opposing walls (51) and (50), respectively, collecting on its bottom, also separately, from which it is resent to the regenerator (31), via conduits (56) and pump (57), and conduit (58) and pump (59) for its regeneration.

On page 9 and figure 1 of the said main patent, as well as in claim 10, another preferred method of embodiment is indicated, consisting in that the regeneration of the cycle fluids may optionally be carried out also by means of adding a third body C, soluble in the solutions formed by bodies A (volatile) and B (absorbent), of the refrigeration circuit, in such a way that said body C joins a part B' of B, thus forming body C.B'. In this way, in solution A + B, only part B-B' remains free from body B, by which the ration A/(B-B') increases, i.e., the solution A + B enriches in component A.

In the main patent is indicated bodies A and B in pages 5 and 6, and the A,B and C in pages 9, 10 and 23, where C may be pure or a mixture of various bodies, i.e. the main patent considers in an evidente manner, that all mixtures or solutions possible of various bodies may be used, and in any physical or chemical condition, as for example A + B, A + C, B + C, A + B + C, A.B., A.C, B.C and A.B.C and their combinations.

Based on these methods or modes, which cover the main patent, improvements have been introduced, which are subsequently summed up in two methods or modes of preferred embodiment, included in the certificate of addition, which as non-limitative example, are described as follows:

1) Improvements to the method of the three bodies A,B and C.

2) Improvements to the method of the two bodies B and C, or A and C.

Both modes or methods are technically equivalent to those of the main patent, since they carry out the same basic cycle, i.e: "The fluid from the absorption (or adsorption) circuit circulates in steam phase, from the evaporator to the absorber or adsorber, and is regenerated passing to liquid phase, from the absorber or adsorber to the evaporator, for a new cycle, separating it from the absorber or adsorber, using the internal energy of the system, thus achieving the unit efficiency or "Perpetual Motile of Second Species", on using the enthalpy difference between the steam of the absorption (or adsorption) circuit and the liquid enthalpy in the regeneration circuit".

Another preferred mode of embodiment

Based on the method of the three bodies A, B and C, improvements have been carried out in the method of the main patent, which allows, when convenient, the integration to the circuit of the heat and refrigeration machine in one single one, which shall be denominated thermorefrigerator, using the same fluid for both, thus permitting the elimination of some elements, replacing them by others with multiple functions and better thermodynamic services.

A description of the improvements shall be made, with reference to the enclosed drawings and their corresponding ones in the main patent, for a better understanding. In this description, the numbers and reference signs of the improvement elements are the same as the ones that have been used for similar elements in the main patent, except that the number of the drawing or figure, which in the improvements is the same as in the main patent, is followed by a letter, thus the drawing or figure 1 of the main patent shall correspond with the 1a and with the 1b of the improvements, and certificate of addition.

It must likewise be considered, as non-limitative example, that the exterior source is the sea water, and that the bodies which intervene in the cycle, are water, ammonium and sodium sulfate, in suitable solutions, plus a liquid which is unmixable with these solutions, when it is necessary as carrier of the sodium sulfate, to facilitate its circulation and movement.

For the description, the same order shall be followed as for the main patent, and shall therefore consist of three zones or plants, according to figure 1a.

Energetic Plant

Conditioning or thermorefrigeration plant

Distilling plant

Energetic plant

It consists, figure 1a, of the following elements:

- A tank or chamber (37), travelled by the sea water, which supplies heat to the evaporator (13) and the reheater evaporator (63), of the refrigeration circuit.

These elements shall correspond, respectively, with chamber (37) and the evaporator (13), and with the condensor (63) of the turbine exhaust, of the main patent.

- An absorber tank (36), containing the absorbent solution of bodies A, B and C, i.e., ammonium, water and sodium sulfate, since for example, they absorb the steams proceeding from the evaporator (13) and the reheater evaporator (63), which enters the same, via conduit (21).

This tank (36), equals and replaces the layers (36) of the regenerator (31) and the absorber (23) and chamber (20) of the main patent.

- An evaporator separator tank (30), which receives the solution proceeding from the tank (36), by means of the conduit (65) and pump (66), in "absorbent" phase, passing to the "volatile" phase, on hydration of the sulfate and the freeing of the ammonium.

From this tank (30), exit pure ammonium or in concentrated solutions, towards the evaporator (13) and the tank (36), via conduit (21) and valve (22), ammonium steam towards the turbine (9), via conduit (11) exiting the exhaust via conduit (12), towards the evaporator reheater (63), continuing via conduit (21) towards the tank (36); hydrated sodium sulfate and auxiliary liquid or unmixable carrier via conduit (28) and valve (29) towards the absorber tank (36).

This tank (30) equals and replaces the volatile layers (30), of the regenerator (31) of the main patent, and thus, likewise, the evaporator (64) of the thermal machine, additionally performing the function of separation of the water and the ammonium, regenerating them and making them available for new cycles.

In view of the previous description and figure 1a, we observe that the perfections and improvements introduced, in this embodiment, may be summarized in three sections as follows:

1) The circuit of the thermal machine and that of the refrigerator remain integrated in one single one, achieving;

- greater useful service
- lower installation costs
- simplification of the system

2) The regenerator (31) of the main patent is divided into two independent tanks, i.e.:

a) The tank (30), contains all the layers (30) of the regenerator (31) and the evaporator (64) of the thermal machine, performing additionally, the functions of separation of the ammonium and water, regenerating them for new cycles.

b) The tank (36), contains all the absorbent layers (36) of the regenerator (31) and the absorber (23) of the main patent, acheiving:

- a decrease or elimination of evaporators and condensors.

- a lowering of the installation and maintenance costs
- an increase in the operational safety.

3) The evaporator (13) and chamber (37) of the main patent is reduced to the tank (37) of sea water, which supplies heat to the evaporator (13), to vaporize the volatile solution of ammonium plus water, and the reheater (63) of the ammonium steam and turbine exhaust water, increasing its enthalpy, and achieving:

- to facilitate the cleaning (13) and (63) of the sea water incrustations, for example.
- to lower the evaporator (13) and the reheater (63) costs.

The operation of the energetic plant is as follows:

The fluid of the exterior source (0), at temperature To, is driven by the pump (1) and conduit (2) to the tank or chamber (37), where it supplies heat to the evaporator (13) and reheater evaporator (63), returning colder, via conduit (3), to the exterior source or to the environment.

This heat supplied by the exterior source evaporates and reheats the evaporator volatile (13) and (63), said steam passing via the conduit (21) to the absorber (or adsorber) (36) reservoir, where it supplies its total absorption or adsorption heat. This heat is used to separate components B and C, i.e. dehydrate sulfate C, for example, freeing water B, said water absorbes the ammonium A steam, remaining a solution of the three bodies A,B and C, at temeratures over that of the hydration of body C, at low pressure, in "absorbent" phase.

This solution passes through tube (65) and pump (66) to the tank (30), which is at a temperature lower than at sulfate hydration temperature, due to which, it rehydrates, i.e., C joins B once more, liberating ammonium A, at high pressure.

The ammonium steam, pure or with certain quantity of steam from B component, passes through tube (11) to the turbine (9), generating the work w, passing the cold exhaust through the tube (12) and (47) to the reheater (63), where it reheats, finally passing to the absorber or adsorber (36), where it supplies heat.

Simultaneously the ammonium rich solution exits from the tank (30), via tube (21) and valve (22), which evaporates in (13), and passes through tube (21) to the reservoir (36), where it is absorbed or adsorbed, generating heat. Through tube (28) and valve (29), the hydrated sodium sulfate exits towards (36), in solution or suspension over the carrier X liquid, unmixable with A and B and its solutions, which on heating at (36) redehydrates, absorbing heat and freeing water, which absorbs the ammonium steam which enters via tube (21), generating heat, thus completing the cyle.

Conditioning plant
It is the same as in the main patent.
Distilling plant
It is the same as in the main patent.

Another preferred embodiment

In this embodiment, bodies B and C are used, as may be hydrates B.C, or else A and C, as may be with solvates A.C, and their solutions, as non-limitative examples, plus liquid X, carrier of C.

The description shall follow the same order as in the main patent, with reference to bodies B and C, for simplifications sake, though it must be understood that it is made extensive to bodies A and C, and consists of three zones or plants, according to figure 1b:
Energetic or basic plant
Conditioning or thermorefrigeration plant
Distilling plant
Energetic plant
Figure 1b, consists of the following elements:

- A tank (37) travelled by the water of the absorption (or adsorption) cycle, which evaporates on taking heat from the evaporator (13) and condensor (63) for the turbine exhaust (9).

These elements are respectively the chamber (37), the sea evaporator (13) and the condensor (63) of the main patent turbine exhaust.

- An absorber (or adsorber) (20) tank, containing the absorbent (or adsorbent) solution of bodies B and C, i.e. water and sodium sulfate, for example, which absorbs (or adsorbs) the steams proceeding from the chamber or tank (37) which enters the same via conduit (19), previously reheated by the exchanger (Ia).

This tank (20) equals and replaces the absorber (23) and chamber (20) of the main patent.

- A separator tank (36), which has the same mission as the volatile fluid regenerator of the absorption or adsorption circuit in liquid phase, separating it from body C, (dehydrate C), at the cost of the internal energy of the system, and replace the tank (31) of the main patent.

To this tank (36) the following elements arrive.

- The solution or suspension proceeding from the tank (20), by means of conduit (67) and pump (B3).
- The solution or suspension proceeding from the bottom of the tank (37), via conduit (68) and pump (B4).

From this tank (36) exit the solution or suspension towards the tank (30) via orifices (69).

The solution or suspension exits from the botton of the tank (36) to the tank (20) via the conduit (28) and the pump (29) for a new cycle.

This tank (36) is additionally equipped with two condensors (C1) and (C2), which supply the necessary heat for the dehydration of the sulfate (for example), for its regeneration in anhydrid, which precipitated in part on the bottom, is carried by the pump (29) conduit (28) and sprays (P), to the tank or chamber (20), for its use as adsorbent, in a new cycle. Likewise, it is equipped with a reheater (70) of the return circuit of the sea water, proceeding from the distilling plant, by means of conduit (3).

- A tank (30) feed from (36) via conduits (69), in which the sodium sulfate is hydrated, i.e. body C, supplying this heat to the evaporator (E1), of the heat pump circuit (B1) and condensor (C1), which delivers it to the tank (36). The hydrated sulfate solution passes to the tank (37), where it cools and separates from the water, by oversaturation. The water rises to the surface to be evaporated in a new cycle, whilst the hydrate precipitates to the bottom, passing via the conduit (68) and pump (B4), to the tank (36) once again, to be dehydrated and sent to the tank (20) for use in a new cycle.

The perfections and improvements introduced may be thus summarized in six sections as follows:

1) The circuit of the thermal machine and of the refrigerator are independent, as in the main patent, achieving:

The capability of using any volatile fluids in the thermal machine, and at greater pressures.

2) the regenerator (31) of the main patent is divided into two indepenent tanks, i.e.:

a) The tank (36) or separator, where it dehydrates the sodium sulfate, regenerating anhydrid for new cycles.

b) The tank (30) where it rehydrates the sulfate, which precipitates, regenerating the water for new cycles, supplying heat.

3) The evaporator (13) is the same as in the main patent, which supplies heat to the water in the absorption or adsorption circuit of the tank (37), which extends now towards the lower tank (36), to take the dehydration water, proceeding from this tank, through the tank (30).

4) It is equipped with a heat exchanger (Ia), which takes the countercurrent of the heat supplied by the dehydration water when passing from the bottom to the surface of (37), and supplies it to (36), since it equals the necessary one to reheat the water absorbed or adsorbed by the anhyrid sulfate, during the adsorption cycle, for carrying it from To to the adsorption temperature in (20).

5) It is equipped with two complete heat pump circuits (B1) and (B2), which take dehydration heats from the sulfate, in (30) and (20), respectively, and transfer them at higher temperature to the tank (36), for its dehydration.

6) It is equipped with a reheater (70), for the sea water distilling plant, the mission of which, is to reheat the return of the sea water, and use this heat for distillation.

The functions of the energetic plant are as follows:

The fluid from the exterior source (0), at temperature To, is driven by the pump (1) and conduit (2) to the tank or chamber (37), where it supplies heat to the evaporator (13), returning cold, to the exterior source or to the distilling plant.

This heat, supplied by the exterior source in (13) is added to the heat of the condensor (63) of the turbin exhaust, evaporating water into the chamber (37), the steam of which, previously reheated by the exchanger Ia, passes through the conduit (19) to the tank (20), where it supplies its total heat of absorption or adsorption to the solution or suspension of the anhydrid sulfate. This heat passes to the evaporator (64) of the thermal machine, and the evaporator (E2) of the heat pump circuit (B2), carrying out the two following functions:

1st) In the evaporator (64), a volatile is evaporated at high pressure which activates the turbine (9), generating work w, passing through the exhaust tube (12) and (47) to the condensor (63), where it supplies its heat to return in liquid form via conduit (32) and pump (33) once again to the evaporator (64), for a new cycle.

2nd) In the evaporator (E2), a volatile is evaporated at sulfate hydration temperature, the steam of which is compressed by the pump (B2) elevating its temperature until it exceeds the sulfate dehydration temperature, condensing in the condensor (C2), where it supplies its heat for said dehydration.

The solution or suspension of the hydrated sulfate passes from (20) to the tank (36), where it reheats and dehydrates on absorption of the heat supplied by the condensors (C1) and (C2), precipitating anhydrid sulfate at the bottom of (36), passing the solution to the tank (30), where it hydrates, supplying this heat to the evaporator (E1), which transfers it by means of the heat pump circuit (B1) to the deposit (36) for dehydration.

From the tank (30) it passes the solution to the tank (37), where it cools at cross-current, in the exchanger Ia, by the cold water steam generated in (37), before being abasorbed in (20), precipitating the hydrated sulfate at the bottom, and passing the cold water (cold water solution and hydrated sulfate) to the surface of (37), to be evaporated by the heat of (13) and (63), and thus be used for a new cycle.

Conditioning plant.

It is the same as in the main patent, due to which it is unnecessary to repeat its charactaeristics.

Distilling plant

The distilling plant, figure 1b, consists of the following elements:
- A tank (62) and interior vacuum chamber (43), with the same purpose as in the main patent, i.e.; to contain the evaporating and condensing cells of sea water and other elements.
- A feeding conduit (3) which carries the cold return of sea water, proceeding from the exchanger (13) and which travels through the tank (62).
  This conduit corresponds with the (53) of sea water intake in the main patent.
- A series of condensor vertical tubes (C) internally travelled by the return cold sea water, delivered by the conduit (3), over which the water steam condenses and is collected in containers placed in their bases.
  These tubes and containers, are equivalent to the condensing surfaces of the cells (D) and the collection containers of the distillation in the main patent.
- A heat exchanger (70), to which the water in the condensors (C) reaches, reheated by the condensation, where it is reheated even more and returned to the tank (62).
  This exchanger (70) is equivalent to the cells (A) of the main patent.
- A conduit (71) and sprays (72), which conduct the water from the exchanger to the tank (62), where it is subjected to the sudden evaporation in the cells (D), condensing on the exterior surface of the condensor vertical tubes (C), collecting the distillation in containers (V), placed on the base, and from these, exit via the conduit (61) to the exterior, for their use.
  This conduit (71) is equivalent to (53) of the main patent, since it conducts sea water for its evaporation in the vacuum chamber (43) which is the interior of the tank (62).
  The operation is as follows:
  The return cold sea water enters the tank (62) via the tube (3), travels through the condensation tubes (C) on the exterior surface of which it condenses distilled water of great purity, which heats the salty water of the tube (3), which passes through the exchanger (70) of the reservoir (36) where it is heated even more. It returns heated via tube (71) to the tank (62) and sprays (72) where it is subjected to sudden evaporation and condenses on the exterior of the condensors (C) which in turn heat the output, thus terminating a complete cycle and cross-current.

Figure 1b represents one single series of cells, to simplify the drawing, though in reality, there are many more cells, according to the number of stages into which the distillating is divided.

Figure 7b indicates the detail of a series of cells and two stages, in which we observe that the condensors (C) work at cross-current, to recover the condensation heat and use it to reheat the mass of return sea water.

The simplifications and improvements introduced into the distilling plant are thus as follows:
Cells (A) of the main patent have been eliminated, thus simplifying the system.

It is not necessary to regenerate the fluids of cells (A), due to which the design is simplified and the cost of the plant decreased.

The distillation is carried out at cross-current, using in part, the condensation heat of the distilled water to raise the salt water return temperature, before entering into the exchanger (70), economizing useful heat.

The intake of sea water is unique, since it is used in the return of the energetic plant.

Contamination of the distillation is impossible due to volatile leaks, since only sea water and distillation are used in this design.

The heat exchanger are simple and more economical, since they are inside the vacuum chamber and the fatigue of the material in unappreciable, also being so, the difference of internal and external pressures of said exchangers.

The circuits and mechanisms of the power plant are equipped with the corresponding automatic and manual control devices, connected to an automatized unit for data processing, which will have the possibility of carrying out orders for the different pump, valves, flow regulators, temperature regulators, concentration of the cycle solutions, pressure regulation, etc. groups.

According to the invention, the present system includes the performance of a Thermodynamical Power Plant which, in ideal facilities integrally converts into useful energy, the heat supplied by any exterior source, preferably natural and renewable, by means of the coupling of an absorption refrigeration machine with a thermal machine, additionally being equipped with a regenerator of the cycle fluids, being able to include a conditioning or thermorefrigeration plant and a distilling plant.

The shape, dimensions and materials may be variable, and in general whatever is accessory, on condition that it does not alter, change or modify the essencial characteristics of the described object.

The terms in which this specification is drawn-up are a true and exact account of the described object, being taken with a wide character and never in limitative form.

**Claims**

1. "THERMODYNAMIC POWER PLANT OF UNIT EFFICIENCY", characterized in that in the same, is carried out thermodynamic cycles, which in ideal facilities, integrally convert into useful energy, the heat supplied by one single exterior source, preferably natural and renewable, such as the sea, the environment, etc., or artifical, and which is applicable in energetic, distilling, thermorefrigeration, plants, land and sea propulsion etc.

   The complete power plant consists of three zones or plants:

   Energetic or basic plant

   Conditioning or thermorefrigeration plant

   Distilling Plant

   The energetic plant consists in coupling a refrigerating absorption machine with a thermal machine, in such a way that the evaporation chamber and the absorption chamber of the former, contains, respectively, the condensor and evaporator of the second, in independent and sealed circuits. The refrigerating machine takes the exterior heat in its evaporator, and delivers it to its absorber at higher tempertaure, and, simultaneously, the thermal machine takes heat from the absorber, carries out work, and returns the remaining heat to the refrigeration evaporator, thus resulting in a total recovery and consequently in a unit efficiency.

   The liquid of the refrigeration cycle is a solution of liquids of different boiling temperatures, and at different concentrations, depending on where it is to be found in the evaporator or absorber, and may be formed by liquids, or else by liquids and solids dissolved in said liquids. The cycle liquid of the thermal is a pure volatile, or a solution of one or various volatiles and one or various absorbents, which improve its thermodynamic services and at different concentrations, according to where it is to be found in the evaporator or absorber.

   The energetic plant consists of:
   - A heat collector of the exterior source, which supplies it to the evaporator in the evaporation chamber, of the refrigeration machine, generating steam.
   - A cylindrical tank with cambered bases, containing the refrigeration evaporator, the evaporation chamber, the heat condensor, the absorption chamber, the absorbant, the evaporator of the thermal, the high pressure chamber, the turbine and the necessary conduits of the system.
   - An evaporator, which takes heat from the fluid of the exterior source, generating steam, in the evaporation chamber, which passes to the absorption chamber.
   - An absorber, which absorbs on its exterior, the steam proceeding from the evaporator and evaporation chamber, of the refrigeration machine, generating heat at higher temperature, which it delivers into its interior, which is the evaporator of the thermal machine.
   - A thermal machine, made up of evaporator, high pressure chamber, turbine or electrical turbogenerator and condensor.
   - A regenerator of the solutions in the refrigeration cycle, which takes them from the evaporation and absorption chambers, by means of suitable conduits, regenerating them and returns them to their initial condition.

   The conditioning or thermorefrigeration plant consists of:

18

- An exchanger-evaporator, which supplies heat into the evaporation chamber, and an absorber, which takes heat in the absorption chamber, depending on whether it is summer or winter, respectively.

The distilling plant consists of:

- Cells, carriers of the absorption refrigeration circuit, coupled to distilling cells, in such a way that the evaporator and the absorber of the refrigerators, are respectivly and on their exterior, the condensor and evaporator of the distillers, and all these contained in a cylindrical and closed tank with cambered bases.

To facilitate the regeneration of bodies A, B and C which intervene in the cycles, another two forms or preferred embodiments have been additionally provided:

1) Method or mode of three bodies A,B and C
2) Method or mode of two bodies B and C, or A and C

All methods described are equivalent, since they perform the same basic cycle, i.e.:

"The absorption circuit fluid (or adsorption, if the body C is a solid), circulates in steam phase, from the evaporator to the absorber (or adsorber), and regenerates passing it on to liquid phase, from the absorber (or adsorber) to the evaporator, for a new cycle, separating it from the absorber (or adsorber), using for this, the internal energy of the system, thus achieving the unit efficiency or "Perpetual Motile of Second Species", being able to use the difference of enthalpy between the steam of the absorption circuit (or adsorption) and the enthalpy of the liquid in the regeneration circuit".

1) Method of three bodies

In the energetic plant

The collector of exterior heat remains reduced to a tank travelled by the fluid of the exterior source, which supplies heat to the refrigeration evaporator and the reheater of the steams or exhaust gases of the turbine.

The circuit of the thermal machine and of the refrigerator remains integrated in one single one.

The regenerator of the main patent remains reduced to two independent tanks: the absorber and the separator.

- The absorber tank contains the absorbent solution of the bodies A, B and C which absorbs the steams proceeding from the refrigeration evaporator and the reheater evaporator of the turbine exhaust, which enters the same via a common conduit.
- The evaporator separator tank receives the solution proceeding from the absorber tank, by means of suitable conduit and pump, in "absorbent" condition, passing on to "volatile" condition, on joining bodies B to C, and freeing A, which evaporates, pure or blended with steams from B.

2) Method of two bodies B and C, or A and C.

In the energetic plant

The circuit of the thermal machine and of the refrigeration machine are independent.

The exterior heat collector evaporator subsequently extends towards the separator tank, being equipped with an exchanger of auxiliary heat. This tank is travelled by the exterior fluid, which supplies heat to the absorption cycle fluid which evaporates, on taking said heat and that of the condensation of the turbine exhaust steam.

The absorber containing the absorbent C, is blended, disolved or suspended in a liquid X, unmixable with B and C, or A and C which permits the body C absorb (or adsorb if C is solid) body B or body A, and simultaneously its movement via conduits and pumps.

The regenerator is divided into two independent tanks:

- The separator tank, intended for regenerating bodies B and C, or A and C, which intervene in the absorption circuit (or adsorption), i.e., separate B from C, or A from C, B or A passing on to the evaporator in liquid phase, at the cost of the internal energy of the system, whilst body C precipitates to the bottom of the tank, totally or partially, to be carried to the absorber (or adsorber) tank, for new cycles. It is additionally equipped with heat pump circuits, to facilitate this separation and an exchanger of heat or reheater for the distilling plant.
- The joint tank of bodies B and C, or A and C, feeded from the separator tank, where bodies B and C, or A and C are reunited, reforming B.C, or A.C, the heat of which is transferred to the separator tank. Disolution B + B.C, or A + A.C passes on to the heat collector of the exterior source, where it cools and separates from its components as follows: body B or A, rises to the surface to be evaporated, whilst B.C or A.C, precipitates to the bottom, by oversaturation, to pass on again to the separator tank, via suitable conduits, to be separated once again in its components B and C, or A and C, and C sent to the absorber (or adsorber) tank, to be used in new cycles, and B or sent once again to the joint tank in solutions formed by B + B.C or A + A.C

In the distilling plant.

The feeding and return of volatile fluids, of the regenerator and the direct intake of sea water is suppressed.

It is equipped with a container tank to contain evaporating and condensating cells of sea water and other elements, being at the same time, a vacuum chamber to produce the sudden evaporation of sea water.

The distilling is carried out making use of this return of cold water, which enters via a suitable conduit, passing through the inside of a series of condensing vertical tubes, over which the steam of distilled water condenses, the heat of which is transmitted to the interior, cold, salt water, which passes on to the heat exchanger or auxiliary reheater, situated in the separator reservoir of the refrigeration circuit, heating and returning to the container tank, into which it enters through sprays, where it is subjected to sudden evaporation, condensing over the exterior of vertical tubes, being collected in containers placed on its bases, and from these passes on to the exterior for use, thus resulting in a distillation by heat exchange at cross-current.

It is equipped with automatic and manual control systems connected to a data processing unit.

2. Thermodynamic Power Plant, according to claim 1, characterized in that the collector of exterior heat consists in an electropump or extractor, which takes fluid from the exterior source and drives it via tubings making it circulate through the interior of the evaporator of the refrigeration circuit, which supplies heat, returning colder via the return tubing to the exterior source or to the environment.

3. Thermodynamic Power Plant, according to claims 1 to 2, characterized in that the cylindrical tank, shall be shaped in the form of a short bottle neck with cambered bases, closed by a deflector plug. It shall be constructed of resistent material, such as steel, PVC, polyester/glass, etc. Its interior is divided, by means of a perforated plate, into two chambers, i.e.: the evaporating and the absorbing chamber, of the refrigeration circuit. The evaporator contains the refrigeration evaporator, the condensor of the thermal and the exchange-evaporator of the conditioner, plus the exit and return tubings of the volatil fluid in the refrigeration circuit. The absorber contains the absorber of the refrigeration circuit, which is in turn, the evaporator of the thermal machine, the heat exchanger, of the conditioner, the high pressure chamber, with its feeding tubes and at its bottle neck, to the turbine, with the exhaust or return conduits of the steam to the condensor of the thermal machine.

4. Thermodynamic Power Plant, according to claims 1 to 3, characterized in that the refrigeration evaporator, consists of a series of vertical and horizontal tubes and plates, of suitable material, over whose interior surface circulates the cooled fluid, proceeding from the exterior source, driven by the electropump or extractor group, considered in claim 2, supplying heat to the volatile fluid, which descends over its exterior surface, generating steam in the evaporation chamber of the refrigeration circuit, passing this steam, by means of perforated plates to the absorber, which absorbes it, generating heat, at higher temperature, which it transfers to its interior.

5. Thermodynamic Power Plant, according to claims 1 to 4, characterized in that the absorber, of the refrigeration circuit is in turn evaporator of the thermal machine and consists of a series of horizontal and vertical tubes and plates of suitable material over whose exterior surface descends the absorbent liquid, proceeding from the regenerator, which absorbs the steam coming from the evaporation chamber, referred to in claim 4, generating heat at higher temperature, which it supplies to the volatil liquid, which descends over its interior surface proceeding from the thermal condensor, evaporating it at higher temperature and pressure, arranging it to activate the turbine or electric turbogenerator.

6. Thermodynamic Power Plant, according to claims 1 to 5, characterized in that the steam coming from the thermal evaporator, according to claim 5, passes through suitable conduits and high pressure chamber to activate the turbine or electric turbogenerator, of the thermal machine, producing a useful work or energy, and finally, passes via suitable conduits to its condensor, where it condenses, supplying heat to its exterior surface, bathed by a volatile solution, proceeding from the regenerator,

EP 0 663 528 A1

generating steam, jointly with the refrigeration evaporator, referred to in claim 4, integrally recovering the rejection heat of the turbine, inside the evaporation chamber of the refrigeration circuit.

7. Thermodynamic Power Plant, according to claims 1 to 6, characterized in that the turbine shall have a specific design for these power plants, which consists in that the axis, drum and vanes shall be cast in one single part of suitable material, preferably resistant plastic, whilst the directing ring, if it exists, shall be cast in two identical parts, diametrically opposed, to facilitate its assembly, which shall be preferably carried out at the bottle neck of the tank, indicated in claim 3, in such a way that the steam penetrates it via the high pressure chamber and exits towards the condensor, via the exhaust conduits, closed to the exterior by means of the deflector plug and the closed housing of the generator.

8. Thermodynamic Power Plant, according to claims 1 to 7, characterized in that the volatile and absorbent solutions of the refrigeration cycle are regenerated in one ionicomolecular regenerator, which consists in a cylindrical and closed tank, with cambered bases, divided into various watertight chambers by means of horizontal plates, each one of said chambers subdivided into two layers of different concentrations: one rich in volatiles and the other rich in absorbents into which enter the volatile and absorbent solutions of the refrigeration cycle, proceeding from the bottom of the evaporation chamber of the refrigeration circuit via a suitable conduit and from the bottom of the absorption chamber via another conduit. To the absorbent layers additionlly arrive, a mass of steam of m kg, by means of a suitable conduit, from the evaporation chamber of the refrigeration circuit, which is absorbed, generating heat, passing liquid to the volatile layers, by means of a permeable ply, said layers cooling, when supplied evaporated to the absorption chamber, via a suitable conduit, originating, in the regenerator, a current of volatile liquid, from the absorbent layer to the volatiles, emphasizing the difference of concentrations between layers, which remain in their initial condition, ready for new cycles.

9. Thermodynamic Power Plant, according to claims 1 to 8, characterized in that the method followed for the regeneration of volatil and absorbent solutions of the refrigeration cycle, consists in using the total absorption heat of a mass of steam of m kg, when absorbed by the absorbent layers of the regenerator, for the separation or passage of $(m + 1)$ kg, by liquid means, from said absorbent layers towards the volatile layers, which simultaneously cool, on evaporation of said mass of m kg of steam and sends it to the absorption chamber of the refrigeration circuit, attaining, by means of this double flow, the regeneration of layers, without requiring evaporation and condensation of the cycle volatile, as required in the present absorption refrigeration machines, and consists of the following phases:
   a) To absorb by means of the absorbent layers, a mass of steam of m kg, proceeding from the evaporation chamber of the the refrigeration circuit, generating heat, and, simultaneously, evaporate, under the same thermodynamic conditions it entered with, equal quantity of steam of m kg, of the volatile layers, cooling them, by which, the variation of internal energy of the regenerator is zero.
   b) To use the total absorption heat, generated in the absorbent layers by the mass of m kg of absorbed steam, to produce the separation or passage of $(m + 1)$ kg of volatile liquid, from these layers to the volatile layers, through a permeable ply, in such a way that in ideal cycles, the heats are equivalent, i.e., that if we take $Q_v$ to be the condensation or vaporization heat, and $Q_d$ the absorption or separation of 1 kg of liquid volatile, the following is complied with:
   In absorbent layers:

$$m(Q_v + Q_d) = (m + 1)Q_d$$
$$mQ_v = Q_d$$

In the volatile layers, if we take $Q_1 + Q_2$ to be the heat supplied by said layers to evaporate m kg of volatile, under the same thermodynamic conditions which enters the regenerator, included that of the mass of 1 kg transferred from the absorbent layer, we ensure that:

$$mQ_v = Q_1 + Q_2 + Q'_d$$

Though the variation of internal energy of the regenerator is zero, then:

$$Q_d = Q_1 + Q_2 + Q'_d$$

21

And taking Q'd = 0 for almost pure volatile solutions in the volatile component, it finally results that:

$$Qd = Q1 + Q2$$

That is to say, 1 kg of liquid volatile has passed from the absorbent layers to the volatile layers, which is the one considered for a unit mass cycle, for simplification. Therefore, the absorbent and volatile layers remain in the same parting conditions, for a new evaporation/absorption cycle of the absorption refrigeration machine circuit, with only having to heat the cycle mass, taken from the volatile layers, since they have been cooled in the regenerator. This heat, which is equivalent to Qd, is compensated by the Qd total heat, of turbine rejection plus that of the refrigerator circuit absorber.

10. Thermodynamic Power Plant, according to claims 1 to 9, characterized in that optionally, the method indicated in claim 9 may be substituted in the whole or in part, by means of a displacement method, adding a body C, soluble in the solutions of the refrigeration circuit when found in the regenerator, in such a way that that they join, chemically or physically, to a less volatile body, thus decreasing its free mass in the solution, which is equivalent to an increase of the volatile concentration in the rest of the less volatile body, obtaining an effect which is equivalent to that indicated in claim 9.

11. Thermodynamic Power Plant, according to claims 1 to 10, characterized in that the turbine may mate with an electric generator by means of a closed housing, opened only by the end adjacent to the turbine, where it is equipped with a collar, for sealed coupling to the exhaust of said turbine, which is attached to the deflector plug, allowing the passage, through the interior spaces, of cold exhaust steam from one to another end of the generator, refrigerating it, this steam returning to the condensor, via suitable conduits, together with the remaining exhaust.

12. Thermodynamic Power Plant, according to claims 1 to 11, characterized in that the conditioning or thermorefrigeration plant supplies heat, by means of an exchange-evaporator, in the evaporation chamber of the refrigeration circuit, to the volatil fluid of the refrigeration machine, thus obtaining industrial cold, or air conditioning during Summer, and likewise, by means of a suitable absorber, it takes heat in the absorption chamber from the refrigeration machine, for the air conditioning of premises during Winter.

13. Thermodynamic Power Plant, according to claims 1 to 12, characterized in that the distilling plant is made up of cells, carriers of the absorption refrigeration circuit, coupled to distilling cells, constructed with hollow tubes and plates constructed of heat conduction material, and arranged in such a way that the evaporator and absorber of the refrigeration cells are respectively, on its exterior surface, condensor and evaporator of the distllators, and all of them contained in a closed tank, cylindrical and with cambered bases, in the interior of which the barometric vacuum reigns, corresponding to the sea water steam, at the temperature that the evaporation is performed. Optionally, the object of the cells may be reversed, in such a way that the refrigerators be distillers and the distillers be the refrigerators, with which the tank shall thus work with interior pressure over that of environmental temperature and not in depression.

To this tank arrives, by means of a conduit, the volatile solution, from the volatile layers of the regenerator, and by means of another conduit, the absorbent solution, from the absorbent layers, which enter the refrigerator circuit cells, separately, descending by opposed walls, collecting on its bottom, also separately, from which they are resent to the regenerator, by means of suitable conduits and pumps, regenerating said solutions for new cycles.

14. Thermodynamic Power Plant, according to claims 1 to 13, characterized in that optionally, the distilling plant may carry a regenerator which is independent from the one indicated in claim 8, in all those cases when it is necessary or advisable.

15. Thermodynamic Power Plant, according to claims 1 to 14, characterized in that the fluid of the heat pumps may be any of the ones known by the present art, in sealed and independent circuits.

16. Thermodynamic Power Plant, according to claims 1 to 15, characterized in that optionally, the fluid of any of the heat pumps may be the actual body B, or A, whose pump is taken vaporized in the separator tank, to compensate for the vaporization, in such a way that the same and the condensation, is performed with the actual internal energy of the system. The liquid B or A passes to the evaporator tank, collector of heat of the exterior source, separating from body C, which precipitates by oversaturation at the bottom of the separator tank, remaining B and C, or A and C, separated (regenerated) and ready for new cycles.

17. Thermodynamic Power Plant, according to claims 1 to 16, characterized in that the reheater, situated in the exterior heat collector evaporator has the mission of reheated the steam of B or A, of the absorption or adsorption refrigeration cycle, between the extreme temperatures of this cycle, at the cost of the sensitive heat which the actual body B or A has in liquid phase, on entering said evaporator.

18. Thermodynamic Power Plant, according to claims 1 to 17, characterized in that all the mechanisms and circuits of the power plant are equipped with the necessary means for automatic and manual control, for which there is provided an automatized power plant for data processing with the possibility of carrying out orders that activate the different pump, valve, flow, temperature, cycle solutions concentration regulators, etc. groups.

FIGURE — I

FIGURE — Ia

FIGURE Ib

EP 0 663 528 A1

37

28    20

21   m.Kç. STEAM

19

m.Kç.STEAM

LIQUID

LIQUID

38

34

m.Kç. STEAM

41

40

FIGURE - 2

$(Q_v - w) + (Q_d - Q_1)$

19

$Q_v + Q_d - Q_1$

23

$Q - Q_v$

13

$Q_v$

$T_1$

$+Q_v$
$+Q_d$

64

20

w

9

37

Q

$-Q_1$

m

0

FIGURE — 3

$(Q_v - w) + (Q_d - Q_1)$

$-Q_d + Q_1$

19

$Q_v + Q_d - Q_1$

23

$Q_v - w$

$Q_v$

Q - w

13

W

37

$+Q_v$
$+Q_d$

64

20

w

9

Q

$+Q_1$

0

m      M+1 Kg  mKg    1 Kg

FIGURE — 4

31

M

30

m+1 Kg

35

36

FIGURE — 5

FIGURE − 6

FIGURE - 7

FIGURE 7b

# INTERNATIONAL SEARCH REPORT

Inte    onal Application No

PCT/ES 94/00068

**A. CLASSIFICATION OF SUBJECT MATTER**
IPC 6    F03G7/10      F03G7/04

According to International Patent Classification (IPC) or to both national classification and IPC

**B. FIELDS SEARCHED**

Minimum documentation searched (classification system followed by classification symbols)
IPC 6    F03G

Documentation searched other than minimum documentation to the extent that such documents are included in the fields searched

Electronic data base consulted during the international search (name of data base and, where practical, search terms used)

**C. DOCUMENTS CONSIDERED TO BE RELEVANT**

| Category* | Citation of document, with indication, where appropriate, of the relevant passages | Relevant to claim No. |
|---|---|---|
| A | FR,A,2 315 068 (R.GUERIN ET AL.) 14 January 1977<br>see page 1, line 15 - page 2, line 13<br>see page 2, line 22 - page 4, line 2<br>see page 6, line 17 - line 25; figures 1,2<br>--- | 1 |
| A | FR,A,2 326 596 (K.PIECHOCKI) 29 April 1977<br>see page 1, line 5 - line 15<br>see page 2, line 7 - line 31<br>see page 3, line 5 - line 10; figure<br>--- | 1 |
| A | FR,A,2 329 869 (K.PIECHOCKI) 27 May 1977<br>see the whole document<br>--- | 1 |
| A | FR,A,2 607 581 (ANCET) 3 June 1988<br>see page 3, line 35 - page 4, line 10;<br>figures<br>---<br>-/-- | 1 |

[X] Further documents are listed in the continuation of box C.    [X] Patent family members are listed in annex.

* Special categories of cited documents :

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art.

"&" document member of the same patent family

| Date of the actual completion of the international search | Date of mailing of the international search report |
|---|---|
| 14 September 1994 | |

| Name and mailing address of the ISA | Authorized officer |
|---|---|
| European Patent Office, P.B. 5818 Patentlaan 2<br>NL - 2280 HV Rijswijk<br>Tel. (+31-70) 340-2040, Tx. 31 651 epo nl,<br>Fax: (+31-70) 340-3016 | Alconchel y Ungria,J |

Form PCT/ISA/210 (second sheet) (July 1992)

C.(Continuation) DOCUMENTS CONSIDERED TO BE RELEVANT

| Category * | Citation of document, with indication, where appropriate, of the relevant passages | Relevant to claim No. |
|---|---|---|
| A | FR,A,2 397 741 (J.BATONNEAU) 9 February 1979<br>see page 1, line 5 - page 2, line 7; figure<br>--- | 1 |
| A | FR,A,1 090 118 (LE ROY) 28 March 1955<br>see page 1, left column, paragraph 1; figures<br>--- | 1 |
| A | LUCIEN BOREL 'thermodynamique et energetique. Vol. 1. Edition 3'<br>1991 , PRESSES POLYTECHNIQUES ET UNIVERSITAIRES ROMANDES , LAUSANNE ,CH<br>see page 16<br>see page 49; figure 1.24<br>----- | 1 |